# EUROPEAN PATENT SPECIFICATION

(11) **EP 2 752 812 B1**
(45) Date of publication and mention of the grant of the patent: **06.01.2021**
(21) Application number: 12837489.9
(22) Date of filing: 25.09.2012
(51) Int. Cl.: B60L 50/50, G06Q 50/10, G01C 21/26, H02J 7/00, H02J 13/00, B60L 53/66, B60L 53/67

(54) **CHARGING INFRASTRUCTURE INFORMATION PROVIDING SYSTEM, CHARGING INFRASTRUCTURE INFORMATION PROVIDING DEVICE, CONTROL METHOD AND PROGRAM**
SYSTEM ZUR BEREITSTELLUNG VON LADEINFRASTRUKTURINFORMATIONEN, VORRICHTUNG ZUR BEREITSTELLUNG VON LADEINFRASTRUKTURINFORMATIONEN, STEUERVERFAHREN UND PROGRAMM
SYSTÈME DE FOURNITURE D'INFORMATIONS D'INFRASTRUCTURE DE CHARGE, DISPOSITIF DE FOURNITURE D'INFORMATIONS D'INFRASTRUCTURE DE CHARGE, PROCÉDÉ DE COMMANDE ET PROGRAMME

(30) Priority: 26.09.2011 JP 2011208969
(43) Date of publication of application: 09.07.2014
(73) Proprietor: Mitsubishi Heavy Industries, Ltd., Tokyo 108-8215 (JP)
(72) Inventor: ONO, Hidekazu, Tokyo 108-8215 (JP); ISHII, Shinya, Tokyo 108-8215 (JP); OWARI, Nobuyuki, Tokyo 108-8215 (JP); ADACHI, Tetsuya, Tokyo 108-8215 (JP)
(74) Representative: Henkel & Partner mbB
(86) International application number: PCT/JP2012/074527
(87) International publication number: WO 2013/047500

(56) References cited:
- EP-A1- 2 175 239
- JP-A- 2001 184 406
- JP-A- 2002 250 633
- JP-A- 2008 131 841
- JP-A- 2011 102 739
- JP-A- 2011 109 586
- JP-A- 2011 180 008
- US-A1- 2009 066 287
- US-A1- 2010 235 209
- US-B2- 6 885 914

## Description

### TECHNICAL FIELD

The present invention relates to a charging infrastructure information providing system, a charging infrastructure information providing device, a control method, and a program. In particular, the present invention relates to a charging infrastructure information providing system and a charging infrastructure information providing device that provide charging infrastructure information to users of electric vehicles, a control method of controlling the charging infrastructure information providing device, and a program for the charging infrastructure information providing device.

### BACKGROUND ART

In recent years, the term "smart" has been frequently used as in "smart grids," "smart meters," "smart communities," and the like. From a perspective of the future of power networks which are social infrastructure systems in the real world, although star-type structures from large-scale power plants to factories, offices, and households have been built at present, distribution, two-way communication, and individualization are expected to progress rapidly due to the advancement and development of wind power generation, solar cells, fuel cells, and storage cells and global warming prevention policies for supporting the advancement and development thereof.

The research and development disclosed in Non Patent Literature 1 proposes an idea of energy informationization to aim for construction of a new ultra-distributed energy social infrastructure by integration of power networks and information networks. More specifically, the research and development disclosed in Non Patent Literature 1 proposes execution of energy management in consideration of not only quantitative energy saving but also a reduction in the amount of generated carbon dioxide by distinguishing powers of respective power supplies from each other when a plurality of power sources are installed in households.

### PRIOR ART LITERATURE

### NON PATENT LITERATURE

[Non Patent Literature 1]
"<University Research Trend> Energy Informationization: Integration of Power Network and Information Network" by Takashi Matsuyama, Cue: Kyoto University Research Information Repository by Department of Electrical Engineering Kyoto University in March, 2010, No. 23, p. 3 to 8

### DISCLOSURE OF INVENTION

### PROBLEMS TO BE SOLVED BY THE INVENTION

According to the research and development disclosed in Patent Literature 1, since the power from each power supply is supplied in association with information regarding this power supply, realization of various types of energy management in light of differences between the power supplies can be considered to be enabled by referring to the information.

However, the research and development disclosed in Patent Literature 1 does not propose energy management realized due to a difference between the power supplies by setting a charging infrastructure of electric vehicles as a target. However, patent US-A-6, 885, 914 (Shimode et al.) shows an energy management system relating the differences between energy suppliers to customer preferences.

### MEANS FOR SOLVING THE PROBLEMS

According to an aspect of the present invention, there is provided a charging infrastructure information providing system providing information regarding charging infrastructures to a user of an electric vehicle. The charging infrastructure information providing system includes a charging infrastructure information providing device configured to provide the information regarding each charging infrastructure to the user of the electric vehicle. The charging infrastructure information providing device includes a charging infrastructure information providing unit configured to preferentially provide information regarding a charging infrastructure making a considerable contribution to supply of power of a predetermined attribute to a user terminal of the user of the electric vehicle.

According to the present invention, there is provided a charging infrastructure information providing system as set out in independent claim 1, a charging infrastructure information providing device as set out in independent claim 5, a control method as set out in independent claim 6, and a program as set out in independent claim 7. Advantageous developments are defined in the dependent claims.

According to another aspect of the present invention, there is provided a charging infrastructure information providing device providing information regarding charging infrastructures to a user of an electric vehicle. The charging infrastructure information providing device includes a charging infrastructure information providing unit configured to preferentially provide information regarding a charging infrastructure making a considerable contribution to supply of power of a predetermined attribute to a user terminal of the user of the electric vehicle.

According to still another aspect of the present invention, there is provided a control method of controlling a charging infrastructure information providing device providing information regarding charging infrastructures to a user of an electric vehicle. The control method includes preferentially providing information regarding a charging infrastructure making a considerable contribution to supply of power of a predetermined attribute to a user terminal of the user of the electric vehicle.

According to further still another aspect of the present invention, there is provided a program for a charging infrastructure information providing device providing information regarding charging infrastructures to a user of an electric vehicle. The program causes the charging infrastructure information providing device to function as a charging infrastructure information providing unit configured to preferentially provide information regarding a charging infrastructure making a considerable contribution to supply of power of a predetermined attribute to a user terminal of the user of the electric vehicle.

In Summary of Invention described above, all of the characteristics necessary for the present invention are not listed, but sub-combinations of the characteristic groups can also be realized as inventions.

### EFFECTS OF THE INVENTION

According to the present invention, as described above, it is possible to encourage operators of charging infrastructures to actively supply power of predetermined attributes to electric vehicles.

### BRIEF DESCRIPTION OF THE DRAWINGS

Fig. 1 is a diagram illustrating an example of a use environment of a charging infrastructure information providing system 100 according to an embodiment.
Fig. 2 is a diagram illustrating an example of a block configuration of a charging infrastructure information providing device 110.
Fig. 3 is a diagram illustrating an example of information stored in a power feed information storage unit 114 in a table form.
Fig. 4 is a diagram illustrating an example of information stored in a charging infrastructure information storage unit 115 in a table form.
Fig. 5 is a diagram illustrating an example of a block configuration of a charging infrastructure device 130a.
Fig. 6 is a diagram illustrating an example of information stored in an attribute information storage unit 135 in a table form.
Fig. 7 is a diagram illustrating an example of an operation sequence of the charging infrastructure information providing device 110, a charging infrastructure device 130, a power company device 150, and an on-vehicle device 170.
Fig. 8 is a diagram illustrating an example of a hardware configuration when the charging infrastructure information providing device 110 and the charging infrastructure device 130 are configured by electronic information processing devices such as computers.

### PREFERRED EMBODIMENTS FOR CARRYING OUT THE INVENTION

Hereinafter, the present invention will be described according to embodiments of the present invention. Also, the following embodiments do not limit the present invention described in the scope of the claims. Further, all of the combinations of the characteristics to be described in the embodiments may not be said to be requisites for the solutions to problems in the present invention.

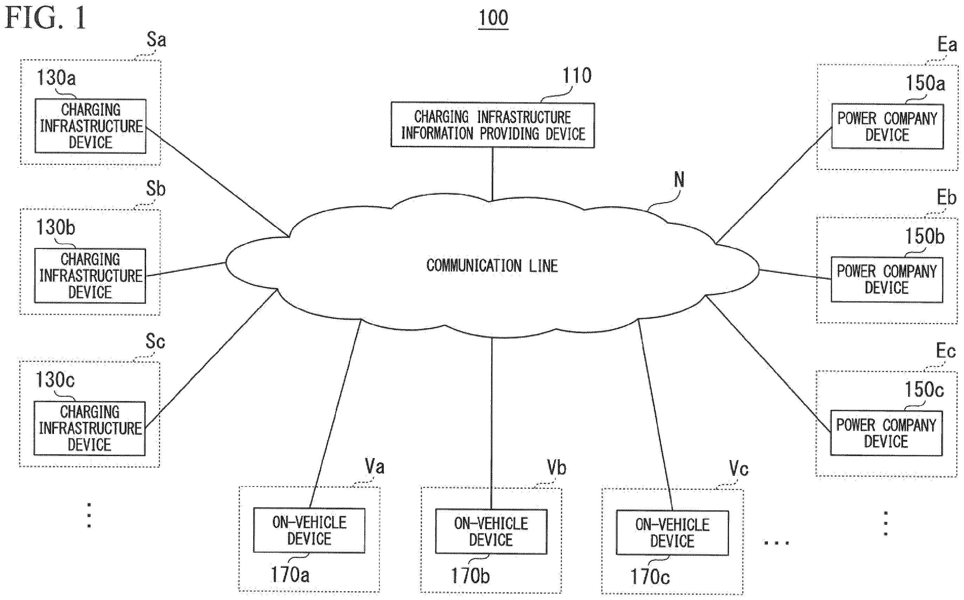

Fig. 1 is a diagram illustrating an example of a use environment of a charging infrastructure information providing system 100 according to an embodiment. In the use environment of the charging infrastructure information providing system 100, it is assumed that there are a plurality of charging infrastructures Sa, Sb, Sc, etc. (hereinafter generically referred to as charging infrastructures S), a plurality of power companies Ea, Eb, Ec, etc. (hereinafter generically referred to as power companies E), and a plurality of electric vehicles Va, Vb, Vc, etc. (hereinafter generically referred to as electric vehicles V). The charging infrastructure information providing system 100 is a system that provides information regarding the charging infrastructures S to users of the electric vehicles V. More specifically, the charging infrastructure information providing system 100 preferentially provides the users of the electric vehicles V with the information regarding the charging infrastructure S making a considerable contribution to supply of power of a predetermined attribute. Here, the attribute refers to, for example, information indicating by which power generation method the power is generated. The power generation method is broadly classified into a power generation method using renewable energy and a power generation method using exhaustible energy. Examples of the renewable energy include energies of wind power, solar light, hydraulic power, a biomass, and the like.

Examples of the exhaustible energy include energies of petroleum, natural gas, oil sands, methane hydrate, uranium, and the like. Also, the contribution refers to an action of preferentially employing power of a predetermined attribute by the charging infrastructure S. Specifically, the contribution refers to an action of preferentially employing energy with a low environment load as in renewable energy instead of exhaustible energy.

The charging infrastructure information providing system 100 includes a charging infrastructure information providing device 110 and a plurality of charging infrastructure devices 130a, 130b, 130c, etc. (hereinafter generically referred to as charging infrastructure devices 130). The charging infrastructure information providing device 110 and each charging infrastructure device 130 are connected to a communication line N. Also, a plurality of power company devices 150a, 150b, 150c, etc. (hereinafter generically referred to as power company devices 150) and a plurality of on-vehicle devices 170a, 170b, 170c, etc. (hereinafter generically referred to as on-vehicle devices 170) are connected to the communication line N. Here, the communication line N includes computer networks such as the Internet, core networks of communication operators, and various local networks. Also, the on-vehicle device 170 may be an example of a "user terminal of a user" in the present invention.

The charging infrastructure information providing device 110 is a device that provides the information regarding the charging infrastructures S to the users of the electric vehicles V. More specifically, the charging infrastructure information providing device 110 receives power-feed data transmitted from each charging infrastructure device 130. The power-feed data includes information regarding an amount of power fed from a charger of the charging infrastructure S to the electric vehicle V and attribute information of the power. Further, the charging infrastructure information providing device 110 sequentially stores the information regarding the amount of power and the attribute information included in the power-feed data received from the charging infrastructure devices 130 in a power-feed information database in association therewith. Furthermore, the charging infrastructure information providing device 110 evaluates a contribution to supply of the power of the predetermined attribute in each charging infrastructure S based on the information stored in the power-feed information database. Here, as a contribution evaluation method, an evaluation method of referring to the absolute values of supply amounts of the power of predetermined attributes or an evaluation method of referring to relative values of the supply amounts of the power of the predetermined attributes is considered. In the evaluation method of referring to the absolute values, for example, when the charging station Sa supplies 10 (kW) of power of a predetermined attribute and the charging station Sb supplies 20 (kW) of power of a predetermined attribute, the charging station Sb is evaluated as making a greater contribution to the supply of the power of the predetermined attribute than the charging station Sa. On the other hand, in the evaluation method of referring to the relative values, for example, when the charging station Sa supplies 100 (kW) of power of various attributes and supplies 10 (kW) of power of a predetermined attribute among the power of the various attributes and the charging station Sb supplies 400 (kW) of power of various attributes and supplies 20 (kW) of power of a predetermined attribute among the power of the various attributes, a ratio of the power of the predetermined attribute supplied by the charging infrastructure Sa to the power of the various attributes is 10 (%) and a ratio of the power of the predetermined attribute supplied by the charging infrastructure Sb is 5 (%). Accordingly, the charging station Sa is evaluated as making a greater contribution to the supply of the power of the predetermined attribute than the charging station Sb. Further, based on the evaluation result, the charging infrastructure information providing device 110 preferentially provides the on-vehicle devices 170 of the users of the electric vehicles V with the information regarding the charging infrastructure S making the considerable contribution to the supply of the power of the predetermined attribute. Also, the power-feed information database may be an example of a "power-feed information storage unit" in the present invention.

The charging infrastructure device 130 is a device that is installed in the charging infrastructure S and manages information regarding power fed from a charger of the charging infrastructure S to an electric vehicle. More specifically, a commercial power supply or a power supply for a charger of a solar light generation system, a storage cell, or the like is assumed to be installed in the charging infrastructure S. Also, operators of the charging infrastructures S are assumed to purchase system power generated by the contracted power companies E. Further, the purchased system power is assumed to be supplied to a charger via a commercial power supply. Also, a storage cell is assumed to be charged with power generated by a solar light generation system. Further, the power discharged from a storage cell is supplied to a charger. That is, a charger is assumed to be supplied with system power from a commercial power supply or to be supplied with power from a storage cell. When a commercial power supply is installed in the charging infrastructure S, the charging infrastructure device 130 acquires data indicating attribute information of the system power supplied from the commercial power supply to the charger. The attribute information of the system power is, for example, assumed to be provided from the power company device 150 of each power company E. Further, when the power supplied from the commercial power supply to the charger is fed to an electric vehicle, the charging infrastructure device 130 transmits power-feed data including an amount of power fed to the electric vehicle and the attribute information of the power indicated by data received from the power company device 150 to the charging infrastructure information providing device 110. Also, when a solar light generation system and a storage cell are installed in the charging infrastructure S, the charging infrastructure device 130 generates attribute information of power generated by the solar light generation system. Further, when the power supplied from the storage cell to a charger is fed to an electric vehicle, the charging infrastructure device 130 transmits power-feed data including an amount of power fed to the electric vehicle and the attribute information of the generated power to the charging infrastructure information providing device 110. Also, the solar light generation system and the storage cell may be examples of "dispersed generation" in the present invention.

The power company device 150 is a device that is operated by each power company E. More specifically, the power company device 150 is a device that provides attribute information of system power supplied by the power company E.

The on-vehicle device 170 is a device that is mounted on the electric vehicle V. More specifically, the on-vehicle device 170 is provided with information regarding the charging infrastructure S from the charging infrastructure information providing device 110.

In the present embodiment, to avoid complication of description, a configuration of the charging infrastructure information providing system 100 including one charging infrastructure information providing device 110 will be described. However, the charging infrastructure information providing system 100 may include a plurality of charging infrastructure information providing devices 110.

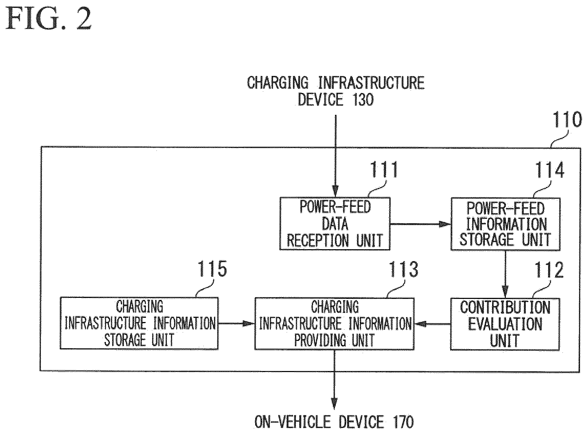

Fig. 2 is a diagram illustrating an example of a block configuration of the charging infrastructure information providing device 110. The charging infrastructure information providing device 110 includes a power-feed data reception unit 111, a contribution evaluation unit 112, a charging infrastructure information providing unit 113, a power-feed information storage unit 114, and a charging infrastructure information storage unit 115. Hereinafter, a function and an operation of each constituent element will be described.

The power-feed data reception unit 111 receives the power-feed data transmitted from each of the charging infrastructure devices 130.

The contribution evaluation unit 112 evaluates a contribution to the supply of the power of the predetermined attribute in each charging infrastructure S based on the information regarding the amount of power fed to the electric vehicle V in each charging infrastructure S and the attribute information of the power in each charging infrastructure S. More specifically, the contribution evaluation unit 112 evaluates a contribution to the supply of the power of the predetermined attribute in each charging infrastructure S based on the information stored in the power-feed information storage unit 114.

The charging infrastructure information providing unit 113 preferentially provides the on-vehicle device 170 of the electric vehicle V with the information regarding the charging infrastructure S making the considerable contribution to the supply of the power of the predetermined attribute. More specifically, the charging infrastructure information providing unit 113 preferentially provides the information regarding the charging infrastructure S making the considerable contribution to the supply of the power of the predetermined attribute based on the result evaluated by the contribution evaluation unit 112.

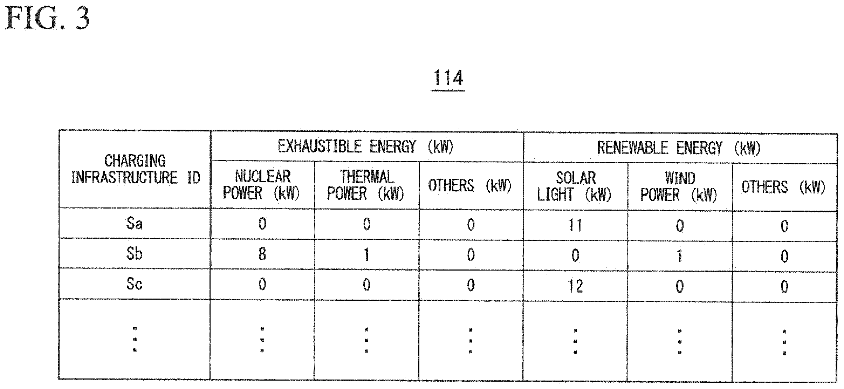

Fig. 3 is a diagram illustrating an example of the information stored in the power feed information storage unit 114 in a table form. The power feed information storage unit 114 stores information regarding each of charging infrastructure identifiers (IDs), exhaustible energy (kW), and renewable energy (kW) in association therewith. Here, with regard to the exhaustible energy (kW), information regarding each of nuclear power (kW), thermal power (kW), and others (kW) is stored in association therewith. Also, with regard to the renewable energy (kW), information regarding each of solar light (kW), wind power (kW), and others (kW) is stored in association therewith.

The charging infrastructure ID is an identification code for uniquely identifying each charging infrastructure S. The nuclear power (kW) is information regarding an amount of power generated by nuclear power generation among the amounts of power supplied to the electric vehicle V during a predetermined period in the charging infrastructure S identified by the charging infrastructure ID. The thermal power (kW) is information regarding an amount of power generated by the thermal power generation among the amounts of power supplied to the electric vehicle V during a predetermined period in the charging infrastructure S identified by the charging infrastructure ID. The others (kW) of the exhaustible energy (kW) is information regarding amounts of power generated by power generation methods using exhaustible energy other than the nuclear power generation and the thermal power generation among the amounts of power supplied to the electric vehicle V during a predetermined period in the charging infrastructure S identified by the charging infrastructure ID. The solar light (kW) is information regarding an amount of power generated by the solar light generation among the amounts of power supplied to the electric vehicle V during a predetermined period in the charging infrastructure S identified by the charging infrastructure ID. The wind power (kW) is information regarding an amount of power generated by the wind power generation among the amounts of power supplied to the electric vehicle V during a predetermined period in the charging infrastructure S identified by the charging infrastructure ID. The others (kW) of the renewable energy (kW) are information regarding amounts of power generated by power generation methods using renewable energy other than the solar light generation and the wind power generation among the amounts of power supplied to the electric vehicle V during a predetermined period in the charging infrastructure S identified by the charging infrastructure ID.

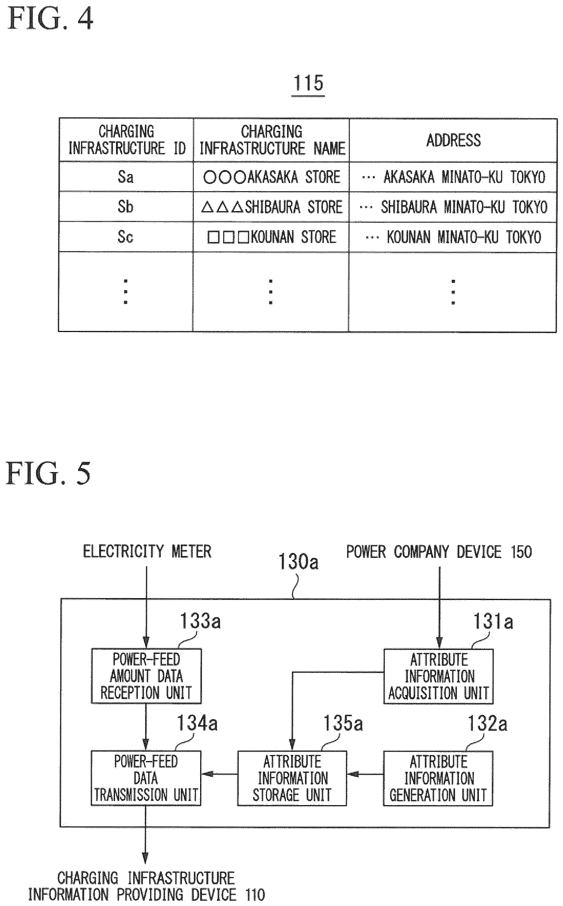

Fig. 4 is a diagram illustrating an example of the information stored in the charging infrastructure information storage unit 115 in a table form. The charging infrastructure information storage unit 115 stores information regarding each of charging infrastructure IDs, charging infrastructure names, and addresses in association therewith.

The charging infrastructure ID is an identification code for uniquely identifying each charging infrastructure S. The charging infrastructure name is the name of the charging infrastructure S identified by the charging infrastructure ID. The address is a location of the charging infrastructure S identified by the charging infrastructure ID.

Fig. 5 is a diagram illustrating an example of a block configuration of the charging infrastructure device 130a. The charging infrastructure device 130a includes an attribute information acquisition unit 131a, an attribute information generation unit 132a, a power-feed amount data reception unit 133a, a power-feed data transmission unit 134a, and an attribute information storage unit 135a.

The charging infrastructure devices 130b, 130c, ctc. other than the charging infrastructure device 130a also include the same constituent elements as the constituent elements included in the charging infrastructure device 130a. In the following description, when the constituent elements included in the charging infrastructure device 130 are distinguished from the constituent elements of the other charging infrastructure devices 130, the same suffix (a, b, c, etc.) as that of the charging infrastructure device 130 including each constituent element is suffixed to each constituent element to distinguish the constituent element from the other constituent elements. For example, the attribute information acquisition unit 131a, an attribute information acquisition unit 131b, and an attribute information acquisition unit 131c indicate the constituent elements of the charging infrastructure device 130a, the charging infrastructure device 130b, and the charging infrastructure device 130c, respectively.

Also, in the following description, a function and an operation of the constituent element with no suffix indicates a function and an operation of any constituent element with the same number. For example, a function and an operation described with regard to the attribute information acquisition unit 131 indicate functions and operations of the attribute information acquisition unit 131a, the attribute information acquisition unit 131b, the attribute information acquisition unit 131c, etc. Hereinafter, a function and an operation of each constituent element will be described.

The attribute information acquisition unit 131 acquires attribute information regarding power supplied from a commercial power supply and a charger installed in the charging infrastructure S.

The attribute information generation unit 132 generates attribute information regarding the power generated by a solar light generation system installed in the charging infrastructure S and supplied from the storage cell to the charger.

The power-feed amount data reception unit 133 receives data indicating an amount of power fed from the commercial power supply to the charger, from an electricity meter. Also, the power-feed amount data reception unit 133 receives data indicating the amount of power fed from the storage cell to the charger from the electricity meter.

The power-feed data transmission unit 134 transmits power-feed data including information regarding an amount of power fed from the charger to an electric vehicle and attribute information regarding the power to the charging infrastructure information providing device 110. More specifically, when the power supplied from the commercial power supply to the charger is fed to the electric vehicle V, the power-feed data transmission unit 134 transmits power-feed data including information regarding an amount of power fed to the electric vehicle V and attribute information regarding the power acquired by the attribute information acquisition unit 131. Also, when power generated by the solar light generation system and supplied from the storage cell to the charger is fed the electric vehicle V, the power-feed data transmission unit 134 transmits power-feed data including information regarding an amount of power fed to the electric vehicle V and attribute information of the power generated by the attribute information generation unit 132.

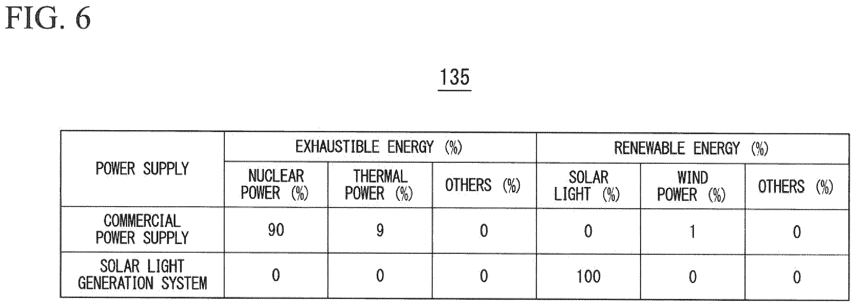

Fig. 6 is a diagram illustrating an example of the information stored in the attribute information storage unit 135 in a table form. The attribute information storage unit 135 stores information regarding each of power, exhaustible energy (%), and renewable energy (%) in association therewith. With regard to the exhaustible energy (%), information regarding each of nuclear power (%), thermal power (%), and others (%) is be stored in association therewith. Also, with regard to the renewable energy (%), information regarding each of solar light (%), wind power (%), and others (%) is stored in association therewith.

The power supply is information indicating a power supply that supplies power to the charger. The nuclear power (%) is a ratio of power generated by nuclear power generation to the amount of power supplied from the power supply. The thermal power (%) is a ratio of power generated by thermal power generation to the amount of power supplied from the power supply. The others (%) of the exhaustible energy (%) are ratios of power generated by power generation methods using exhaustible energy other than the nuclear power generation and the thermal power generation to the amount of power supplied from the power supply. The solar light (%) is a ratio of power generated by solar light generation to the amount of power supplied from the power supply. The wind power (%) is a ratio of power generated by wind power generation to the amount of power supplied from the power supply. The others (%) of the renewable energy (%) are ratios of power generated by power generation methods using renewable energy other than the solar light generation and the wind power generation to the amount of power supplied from the power supply.

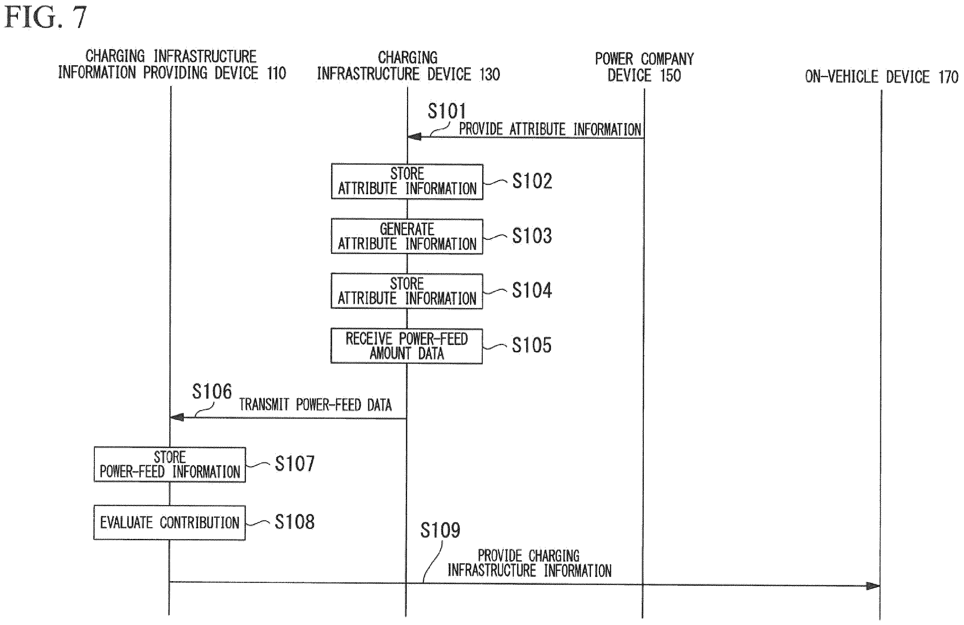

Fig. 7 is a diagram illustrating an example of an operation sequence of the charging infrastructure information providing device 110, the charging infrastructure device 130, the power company device 150, and the on-vehicle device 170. This operation sequence represents operations of evaluating a contribution to supply of power of a predetermined attribute with reference to the absolute value of a supply amount of power generated by solar light generation and preferentially providing the on-vehicle device 170 of the electric vehicle V with information of the charging infrastructure S making a considerable contribution to the supply of the power generated by the solar light generation. In this operation sequence, FIGS. 1 to 6 are all referred to.

A commercial power supply is assumed to be installed in the charging infrastructure S as a power supply. Further, the commercial power supply is assumed to be supplied with system power generated by the power companies E contracted with the operator of the charging infrastructure S. Furthermore, the attribute information of the system power generated by each power company E is assumed to be publicly available. For example, each power company E is assumed to allow the power company device 150 to release the attribute information of the system power it has generated to the World Wide Web (WWW). In this case, the attribute information acquisition unit 131 of the charging infrastructure device 130 acquires the attribute information of the system power released by the power company device 150 (S101). For example, when power generated by a plurality of kinds of power generation methods is mixed and supplied as system power, the attribute information of the system power is considered as information indicating a ratio of the amounts of power generated by each power generation method. Then, the attribute information acquisition unit 131 stores the acquired attribute information of the system power in the attribute information storage unit 135 (S102). Thus, the attribute information of the system power generated by the contracted power companies E and supplied from the commercial power supply to the charger is stored in the attribute information storage unit 135 of the charging infrastructure device 130, as illustrated in FIG. 6.

Also, a solar light generation system and a storage cell are further installed as power supplies in the charging infrastructure S in some cases. In this case, the attribute information generation unit 132 of the charging infrastructure device 130 generates attribute information of the power generated by the solar light generation system and supplied from the storage cell to the charger (S103). For example, the attribute information generation unit 132 generates information indicating solar light generation 100 (%) as the attribute information of the power. Then, the attribute information generation unit 132 stores the generated attribute information of the power in the attribute information storage unit 135 (S104). Thus, the attribute information of the power generated by the solar light generation system and supplied from the storage cell to the charger is stored in the attribute information storage unit 135, as illustrated in FIG. 6.

The power fed from the charger to the electric vehicle V is supplied from the commercial power supply or the storage cell. Here, a first electricity meter that measures an amount of power supplied from the commercial power supply to the charger and a second electricity meter that measures an amount of power supplied from the storage cell to the charger are assumed to be installed in the charging station S. When the power is supplied from the commercial power supply to the charger, the first electricity meter measures the amount of supplied power and transmits power-feed amount data indicating the measured value to the charging infrastructure device 130. Likewise, when the power is supplied from the storage cell to the charger, the second electricity meter measures the amount of supplied power and transmits power-feed amount data indicating the measured value to the charging infrastructure device 130. When the power-feed amount data reception unit 133 of the charging infrastructure device 130 receives the power-feed amount data transmitted from the first electricity meter or the second electricity meter (S105), the power-feed amount data reception unit 133 transmits data including information regarding the measured value of the amount of power indicated by the power-feed amount data and information indicating the electricity meter performing the measurement to the power-feed data transmission unit 134.

When the power-feed data transmission unit 134 of the charging infrastructure device 130 receives the data transmitted from the power-feed amount data reception unit 133, the power-feed data transmission unit 134 reads the information stored in the attribute information storage unit 135.

For example, when the data received from the power-feed amount data reception unit 133 includes information indicating that the electricity meter measuring the amount of power is the first electricity meter, the power-feed data transmission unit 134 reads the attribute information stored in association with the power supply "commercial power supply." Also, when the data received from the power-feed amount data reception unit 133 includes information indicating that the electricity meter measuring the amount of power is the second electricity meter, the power-feed data transmission unit 134 reads the attribute information stored in association with the power supply "solar light generation system." Then, the power-feed data transmission unit 134 transmits, to the charging infrastructure information providing device 110, power-feed data including the charging infrastructure ID, the information regarding the measured value of the amount of power included in the data received from the power-feed amount data reception unit 133, and the attribute information read from the attribute information storage unit 135 (S106).

Whenever the power is fed to the electric vehicle V in the charging infrastructure S, the charging infrastructure device 130 of each charging infrastructure S repeats the same processes as steps S101 to S106 described above.

Whenever the power-feed data reception unit 111 of the charging infrastructure information providing device 110 receives the power-feed data transmitted from the charging infrastructure device 130, the power-feed data reception unit 111 stores the information regarding the amount of power fed to the electric vehicle V in the charging infrastructure S and the attribute information of the power in association therewith based on the information included in the power-feed data in the power-feed information storage unit 114 (S107). For example, when information regarding the charging infrastructure ID "Sa," an amount of power "10 (kW)," and solar light "100 (%)" is included in the power-feed data, the power-feed data reception unit 111 stores values obtained by adding nuclear power "0 (kW)," thermal power "0 (kW)," and the others "0 (kW)" of the exhaustible energy, and solar light "10 (kW)," wind power "0 (kW)," and the others "0 (kW)" of the renewable energy to values of the respective information stored in association with the charging infrastructure ID "Sa" among the information stored in the power-feed information storage unit 114. Thus, whenever power is fed to the electric vehicle V in the charging infrastructure S, the information regarding the amount of power of each attribute fed in this charging infrastructure S is integrated and stored in the power-feed information storage unit 114.

Thus, when the information stored in the power-feed information storage unit 114 is updated, the contribution evaluation unit 112 of the charging infrastructure information providing device 110 evaluates the contribution to the supply of the power of the predetermined attribute in each charging infrastructure S based on the information stored in the power-feed information storage unit 114 (S108). In the case of this example, the contribution evaluation unit 112 evaluates the contribution to the supply of the power generated by a power generation method using the renewable energy. In the case of this example, the contribution evaluation unit 112 evaluates the absolute value of the solar light (kW) associated with each charging infrastructure ID. Then, the contribution evaluation unit 112 transmits, as the evaluation result, data indicating a predetermined number of charging infrastructure IDs to the charging infrastructure information providing unit 113 in order from the larger absolute value of the solar light (kW).

When the charging infrastructure information providing unit 113 of the charging infrastructure information providing device 110 receives the data transmitted from the contribution evaluation unit 112, the charging infrastructure information providing unit 113 reads the information stored in the charging infrastructure information storage unit 115. For example, the charging infrastructure information providing unit 113 reads the charging infrastructure name and the address stored in association with each charging infrastructure ID indicated by the data received by the contribution evaluation unit 112. Then, the charging infrastructure information providing unit 113 provides the read information to the on-vehicle device 170 by releasing the information to, for example, the WWW (S109).

Thus, the on-vehicle device 170 can acquire the information regarding the charging infrastructure S released by the charging infrastructure information providing device 110. Depending on the information, the information regarding the charging infrastructure S making a considerable contribution to the supply of the power generated by the solar light generation is preferentially introduced. Of course, an increase in attraction of customers in the introduced charging infrastructure S can be expected. Accordingly, this can be predicted to encourage operators of the charging infrastructures S to actively supply the power generated by the solar light generation when they wish to introduce their charging infrastructures S to the users of the electric vehicles V.

As described above, the charging infrastructure information providing system 100 can encourage the operators of the charging infrastructures S to actively supply the power of the predetermined attribute to the electric vehicles V.

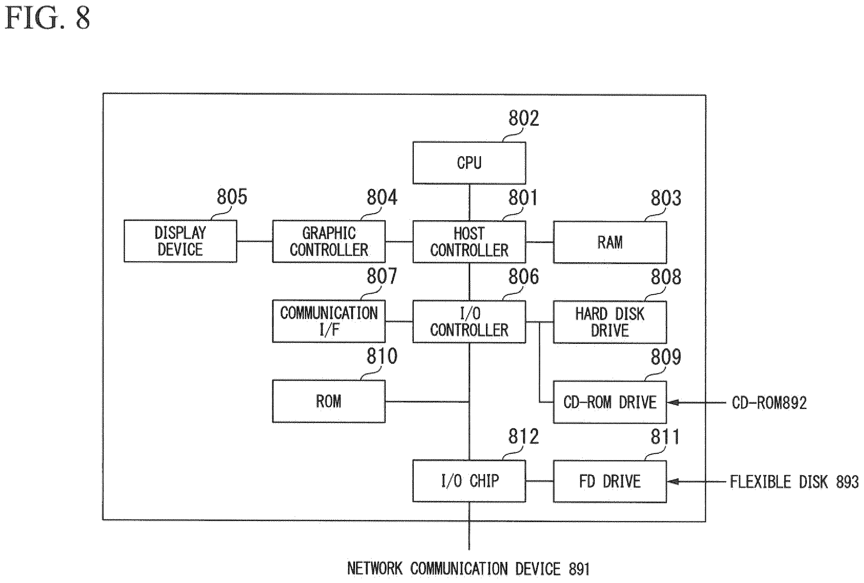

Fig. 8 is a diagram illustrating an example of a hardware configuration when the charging infrastructure information providing device 110 and the charging infrastructure device 130 are configured by electronic information processing devices such as computers. The charging infrastructure information providing device 110 and the charging infrastructure device 130 include a central processing unit (CPU) peripheral unit, an input and output unit, and a legacy input and output unit. The CPU peripheral unit includes a CPU 802, a random access memory (RAM) 803, a graphic controller 804, and a display device 805 connected to each other by a host controller 801. The input and output unit includes a communication interface 807, a hard disk drive 808, and a compact disk read-only memory (CD-ROM) drive 809 connected to the host controller 801 by an input and output controller 806. The legacy input and output unit includes a read-only memory (ROM) 810, a flexible disk drive 811, and an input and output chip 812 connected to the input and output controller 806.

The host controller 801 connects the RAM 803 to the CPU 802 and the graphic controller 804 accessing the RAM 803 at a high transmission rate. The CPU 802 operates based on programs stored in the RAM 810 and the RAM 803 and controls each unit. The graphic controller 804 acquires image data generated on a frame buffer formed in the RAM 803 by the CPU 802 or the like and displays the image data on the display device 805. Instead, the graphic controller 804 may include a frame buffer storing the image data generated by the CPU 802 or the like therein.

The input and output controller 806 connects the host controller 801 to the communication interface 807, the CD-ROM drive 809, and the hard disk drive 808 which are relatively high speed input and output devices. The hard disk drive 808 stores a program and data used by the CPU 802. The communication interface 807 connects to a network communication device 891 to transmit and receive a program and data. The CD-ROM drive 809 reads a program or data from the CD-ROM 892 and provides the program or the data to the hard disk drive 808 and the communication interface 807 via the RAM 803.

The ROM 810R and relatively low speed input and output devices of the flexible disk drive 811 and the input and output chip 812 are connected to the input and output controller 806. The ROM 810 stores, for example, boot programs executed at the time of activation of the charging infrastructure information providing device 110 and the charging infrastructure device 130 or a program dependent on hardware of the charging infrastructure information providing device 110 and the charging infrastructure device 130. The flexible disk drive 811 reads a program or data from a flexible disk 893 and provides the program or the data to the hard disk drive 808 and the communication interface 807 via the RAM 803. The input and output chip 812 connects various input and output devices via the flexible disk drive 811, a parallel port, a serial port, a keyboard port, a mouse port, or the like.

A program executed by the CPU 802 is stored in a recording medium such as the flexible disk 893, the CD-ROM 892, an integrated circuit (IC) card, or the like to be provided to users. The program stored in the recording medium may or may not be compressed. The program is installed from the recording medium to the hard disk drive 808, is read to the RAM 803, and is executed by the CPU 802. The program executed by the CPU 802 causes the charging infrastructure information providing device 110 to function as the power-feed data reception unit 111, the contribution evaluation unit 112, the charging infrastructure information providing unit 113, the power-feed information storage unit 114, and the charging infrastructure information storage unit 115 described with reference to FIGS. 1 to 7 and causes the charging infrastructure device 130 to function as the attribute information acquisition unit 131, the attribute information generation unit 132, the power-feed amount data reception unit 133, the power-feed data transmission unit 134, and the attribute information storage unit 135 described with reference to FIGS. 1 to 7.

The above-described programs may be stored in an external storage medium. Examples of available storage media include not only the flexible disk 893 and the CD-ROM 892 but also an optical storage medium such as a digital versatile disk (DVD) or a phase disk (PD), a magneto-optical storage medium such as a mini disk (MD), a tape medium, and a semiconductor memory such as an IC card. Also, a storage medium such as a hard disk or a RAM provided in a server system connected to a dedicated communication network or the Internet may be used as the storage medium and the above program may be provided as a program via a network.

The preferred embodiments of the present invention have been described above, but the present invention is not limited to the foregoing embodiments. The present invention is not limited to the above description and is limited only by the appended claims.

### INDUSTRIAL APPLICABILITY

The present invention relates to a charging infrastructure information providing system configured to provide information regarding each charging infrastructure to users of electric vehicles. According to the present invention, it is possible to encourage operators of the charging infrastructures to actively supply power of a predetermined attribute to the electric vehicles.

### DESCRIPTION OF THE REFERENCE SYMBOLS

100 Charging infrastructure information providing system
110 Charging infrastructure information providing device
111 Power-feed data reception unit
112 Contribution evaluation unit
113 Charging infrastructure information providing unit
114 Power-feed information storage unit
115 Charging infrastructure information storage unit
130 Charging infrastructure device
131 Attribute information acquisition unit
132 Attribute information generation unit
133 Power-feed amount data reception unit
134 Power-feed data transmission unit
135 Attribute information storage unit
150 Power company device
170 On-vehicle device
801 Host controller
802 CPU
803 RAM
804 Graphic controller
805 Display device
806 Input and output controller
807 Communication interface
808 Hard disk drive
809 CD-ROM drive
810 ROM
811 Flexible disk drive
812 Input and output chip
891 Network communication device
892 CD-ROM
893 Flexible disk
E Power company
N Communication line
S Charging infrastructure
V Electric vehicle

## Claims

1. A charging infrastructure information providing system (100) providing information regarding charging infrastructures (S) to a user of an electric vehicle (V), the charging infrastructure information providing system (100) comprising:
a charging infrastructure information providing device (110) configured to provide the information regarding each charging infrastructure (S) to the user of the electric vehicle (V) by releasing the information to the world wide web,
wherein the charging infrastructure information providing device (110) includes:
a charging infrastructure information providing unit (113) configured to provide information regarding a charging infrastructure (S), which preferentially employs power generated by a first power generation method in preference to power generated by a second power generation method, to a user terminal of the user of the electric vehicle (V) by releasing the information to the world wide web, wherein the user terminal of the user of the electric vehicle (V) is configured to acquire the released information; and
a contribution evaluation unit (112) configured to evaluate a ratio of the first power generation method and the second power generation method used by each charging infrastructure (S) based on information regarding an amount of power fed to the electric vehicle (V) in each charging infrastructure (S) and information indicating by which power generation method the power is generated,
wherein the charging infrastructure information providing unit (113) is configured to provide the information regarding the charging infrastructure (S), which preferentially employs power generated by the first power generation method in preference to power generated by the second power generation method, based on a result evaluated by the contribution evaluation unit (112),
wherein the charging infrastructure information providing device (110) further includes a power-feed information storage unit (114) configured to sequentially store the information regarding the amount of power fed to the electric vehicle (V) in each charging infrastructure (S) and the information indicating by which power generation method the power is generated in association therewith, and
wherein the contribution evaluation unit (112) of the charging infrastructure information providing device (110) is configured to evaluate the ratio of the first power generation method and the second power generation method used by each charging infrastructure (S) based on the information stored in the power-feed information storage unit (114),
the charging infrastructure information providing system (100) further comprising:
a plurality of charging infrastructure devices (130) configured to be installed in the plurality of charging infrastructures (S), respectively, and manage information regarding power fed from a charger of the charging infrastructure (S) to the electric vehicle (V),
wherein each of the charging infrastructure devices (130) includes a power-feed data transmission unit (134) configured to transmit power-feed data including the information regarding the amount of power fed from the charger to the electric vehicle (V) and information indicating by which power generation method the power is generated to the charging infrastructure information providing device (110),
wherein the charging infrastructure information providing device (110) further includes a power-feed data reception unit (111) that is configured to receive the power-feed data transmitted from each of the charging infrastructure devices (130), and
wherein the power-feed information storage unit (114) of the charging infrastructure information providing device (110) is configured to sequentially store the information regarding the amount of power and the information indicating by which power generation method the power is generated included in the power-feed data received by the power-feed data reception unit (111) in association therewith.

2. The charging infrastructure information providing system (100) according to claim 1, wherein
the first power generation method includes at least one of wind power, solar light, hydraulic power, and a biomass, and
the second power generation method includes at least one of petroleum, natural gas, oil sands, methane hydrate, and uranium.

3. The charging infrastructure information providing system (100) according to claim 1 or 2,
wherein each of the charging infrastructure devices (130) further includes an attribute information acquisition unit (131) configured to acquire information indicating by which power generation method power supplied from a commercial power supply installed in the charging infrastructure to the charger is generated, and
wherein, when the power supplied from the commercial power supply to the charger is fed to the electric vehicle (V), the power-feed data transmission unit (134) of each of the charging infrastructure devices (130) transmits power-feed data including information regarding an amount of power fed to the electric vehicle (V) and the information indicating by which power generation method the power is generated acquired by the attribute information acquisition unit (131).

4. The charging infrastructure information providing system (100) according to claim 1 or 2,
wherein each of the charging infrastructure devices (130) further includes an attribute information generation unit (132) configured to generate information indicating by which power generation method power supplied from distributed generation installed in the charging infrastructure to the charger is generated, and
wherein, when the power supplied from the distributed generation to the charger is fed to the electric vehicle (V), the power-feed data transmission unit (134) of each of the charging infrastructure devices (130) transmits power-feed data including information regarding an amount of power fed to the electric vehicle (V) and the information indicating by which power generation method the power is generated generated by the attribute information generation unit (132).

5. A charging infrastructure information providing device (110) providing information regarding charging infrastructures (S) to a user of an electric vehicle (V), the charging infrastructure information providing device (110) comprising:
a charging infrastructure information providing unit (113) configured to provide information regarding a charging infrastructure, which preferentially employs power generated by the first power generation method in preference to power generated by the second power generation method, to a user terminal of the user of the electric vehicle (V) by releasing the information to the world wide web, wherein the user terminal of the user of the electric vehicle (V) is configured to acquire the released information; and
a contribution evaluation unit (112) configured to evaluate a ratio of the first power generation method and the second power generation method used by each charging infrastructure (S) based on information regarding an amount of power fed to the electric vehicle (V) in each charging infrastructure (S) and information indicating by which power generation method the power is generated,
wherein the charging infrastructure information providing unit (113) is configured to provide the information regarding the charging infrastructure (S), which preferentially employs power generated by the first power generation method in preference to power generated by the second power generation method, based on a result evaluated by the contribution evaluation unit (112),
wherein the charging infrastructure information providing device (110) further includes a power-feed information storage unit (114) configured to sequentially store the information regarding the amount of power fed to the electric vehicle (V) in each charging infrastructure (S) and the information indicating by which power generation method the power is generated in association therewith,
wherein the contribution evaluation unit (112) of the charging infrastructure information providing device (110) is configured to evaluate the ratio of the first power generation method and the second power generation method used by each charging infrastructure (S) based on the information stored in the power-feed information storage unit (114),
wherein the charging infrastructure information providing device (110) further includes a power-feed data reception unit (111) that is configured to receive the power-feed data transmitted from each of a plurality of charging infrastructure devices (130) configured to be installed in the plurality of charging infrastructures (S), respectively, and manage information regarding power fed from a charger of the charging infrastructure (S) to the electric vehicle (V),
wherein each of the charging infrastructure devices (130) includes a power-feed data transmission unit (134) configured to transmit power-feed data including the information regarding the amount of power fed from the charger to the electric vehicle (V) and information indicating by which power generation method the power is generated to the charging infrastructure information providing device (110), and
wherein the power-feed information storage unit (114) of the charging infrastructure information providing device (110) is configured to sequentially store the information regarding the amount of power and the information indicating by which power generation method the power is generated included in the power-feed data received by the power-feed data reception unit (111) in association therewith.

6. A control method of controlling a charging infrastructure information providing device (100) providing information regarding charging infrastructures (S) to a user of an electric vehicle (V), the control method comprising:
a charging infrastructure information providing step of providing information regarding a charging infrastructure (S), which preferentially employs power generated by the first power generation method in preference to power generated by the second power generation method, to a user terminal of the user of the electric vehicle (V) by releasing the information to the world wide web, wherein the user terminal of the user of the electric vehicle (V) acquires the released information; and
a contribution evaluation step of evaluating a ratio of the first power generation method and the second power generation method used by each charging infrastructure (S) based on information regarding an amount of power fed to the electric vehicle (V) in each charging infrastructure (S) and information indicating by which power generation method the power is generated,
wherein, in the charging infrastructure information providing step, the information regarding the charging infrastructure (S), which preferentially employs power generated by the first power generation method in preference to power generated by the second power generation method, is provided based on a result evaluated in the contribution evaluation step,
wherein, in the charging infrastructure information providing step, the information regarding the amount of power fed to the electric vehicle (V) in each charging infrastructure (S) and the information indicating by which power generation method the power is generated in association therewith are sequentially stored,
wherein, in the contribution evaluation step, the ratio of the first power generation method and the second power generation method used by each charging infrastructure (S) is evaluated based on the stored information,
wherein the charging infrastructure information providing step further includes a power-feed data reception step of receiving the power-feed data transmitted from each of a plurality of charging infrastructure devices (130) configured to be installed in the plurality of charging infrastructures (S), respectively, and manage information regarding power fed from a charger of the charging infrastructure (S) to the electric vehicle (V),
wherein each of the charging infrastructure devices (130) includes a power-feed data transmission unit (134) transmitting power-feed data including the information regarding the amount of power fed from the charger to the electric vehicle (V) and information indicating by which power generation method the power is generated to the charging infrastructure information providing device (110), and
wherein, in the charging infrastructure information providing step, the information regarding the amount of power and the information indicating by which power generation method the power is generated included in the power-feed data received in the power-feed data reception step in association therewith are sequentially stored.

7. A program for a charging infrastructure information providing device (100) providing information regarding charging infrastructures (S) to a user of an electric vehicle (V), the program causing the charging infrastructure information providing device (100)
to function as a charging infrastructure information providing unit (113) configured to provide information regarding a charging infrastructure, which preferentially employs power generated by the first power generation method in preference to power generated by the second power generation method, to a user terminal of the user of the electric vehicle (V) by releasing the information to the world wide web, wherein the user terminal of the user of the electric vehicle (V) acquires the released information, and
to function as a contribution evaluation unit (112) configured to evaluate a ratio of the first power generation method and the second power generation method used by each charging infrastructure (S) based on information regarding an amount of power fed to the electric vehicle (V) in each charging infrastructure (S) and information indicating by which power generation method the power is generated,
wherein the charging infrastructure information providing unit (113) is configured to provide the information regarding the charging infrastructure (S), which preferentially employs power generated by the first power generation method in preference to power generated by the second power generation method, based on a result evaluated by the contribution evaluation unit (112),
the program further causing the charging infrastructure information providing device (100)
to function as a power-feed information storage unit (114) configured to sequentially store the information regarding the amount of power fed to the electric vehicle (V) in each charging infrastructure (S) and the information indicating by which power generation method the power is generated in association therewith,
wherein the contribution evaluation unit (112) of the charging infrastructure information providing device (110) is configured to evaluate the ratio of the first power generation method and the second power generation method used by each charging infrastructure (S) based on the information stored in the power-feed information storage unit (114), and
the program further causing the charging infrastructure information providing device (100)
to function as a power-feed data reception unit (111) that is configured to receive the power-feed data transmitted from each of a plurality of charging infrastructure devices (130) configured to be installed in the plurality of charging infrastructures (S), respectively, and manage information regarding power fed from a charger of the charging infrastructure (S) to the electric vehicle (V),
wherein each of the charging infrastructure devices (130) includes a power-feed data transmission unit (134) configured to transmit power-feed data including the information regarding the amount of power fed from the charger to the electric vehicle (V) and information indicating by which power generation method the power is generated to the charging infrastructure information providing device (110), and
wherein the power-feed information storage unit (114) of the charging infrastructure information providing device (110) is configured to sequentially store the information regarding the amount of power and the information indicating by which power generation method the power is generated included in the power-feed data received by the power-feed data reception unit (111) in association therewith.

## Patentansprüche

1. Ein Ladeinfrastruktur-Informationsbereitstellungssystem (100), das Informationen hinsichtlich Ladeinfrastrukturen (S) einem Nutzer eines elektrischen Fahrzeugs (V) bereitstellt, wobei das Ladeinfrastruktur-Informationsbereitstellungssystem (100) aufweist:
eine Ladeinfrastruktur-Informationsbereitstellungsvorrichtung (110), die konfiguriert ist, um die Informationen hinsichtlich jeder Ladeinfrastruktur (S) dem Nutzer des elektrischen Fahrzeugs (V) bereitzustellen, indem die Informationen dem World Wide Web zur Verfügung gestellt werden,
wobei die Ladeinfrastruktur-Informationsbereitstellungsvorrichtung (110) umfasst:
eine Ladeinfrastruktur-Informationsbereitstellungseinheit (113), die konfiguriert ist, um Informationen hinsichtlich einer Ladeinfrastruktur (S), die vorzugsweise durch ein erstes Energieerzeugungsverfahren erzeugte Energie anstelle einer durch ein zweites Energieerzeugungsverfahren erzeugten Energie verwendet, einem Nutzerendgerät des Nutzers des elektrischen Fahrzeugs (V) bereitzustellen, indem die Informationen dem World Wide Web zur Verfügung gestellt werden, wobei das Nutzerendgerät des Nutzers des elektrischen Fahrzeugs (V) konfiguriert ist, um die zur Verfügung gestellten Informationen zu akquirieren; und
eine Beitragsbewertungseinheit (112), die konfiguriert ist, um ein Verhältnis des ersten Energieerzeugungsverfahrens und des zweiten Energieerzeugungsverfahrens, die durch jede Ladeinfrastruktur (S) verwendet werden, basierend auf Informationen hinsichtlich einer Menge der dem elektrischen Fahrzeug (V) in jeder Ladeinfrastruktur (S) zugeführten Energie und Informationen zu bewerten, die anzeigen, durch welches Energieerzeugungsverfahren die Energie erzeugt wird,
wobei die Ladeinfrastruktur-Informationsbereitstellungseinheit (113) konfiguriert ist, um die Informationen hinsichtlich der Ladeinfrastruktur (S), die vorzugsweise durch das erste Energieerzeugungsverfahren erzeugte Energie anstelle einer durch das zweite Energieerzeugungsverfahren erzeugten Energie verwendet, basierend auf einem durch die Beitragsbewertungseinheit (112) bewerteten Ergebnis bereitzustellen,
wobei die Ladeinfrastruktur-Informationsbereitstellungsvorrichtung (110) ferner eine Energiezufuhr-Informationsspeichereinheit (114) umfasst, die konfiguriert ist, um die Informationen hinsichtlich der Menge an Energie, die dem elektrischen Fahrzeug (V) in jeder Ladeinfrastruktur (S) zugeführt wird, und die Informationen sequenziell in Verbindung zueinander zu speichern, die anzeigen, durch welches Energieerzeugungsverfahren die Energie erzeugt wird, und
wobei die Beitragsbewertungseinheit (112) der Ladeinfrastruktur-Informationsbereitstellungsvorrichtung (110) konfiguriert ist, um das Verhältnis des ersten Energieerzeugungsverfahrens und des zweiten Energieerzeugungsverfahrens, die durch jede Ladeinfrastruktur (S) verwendet werden, basierend auf den in der Energiezufuhr-Informationsspeichereinheit (114) gespeicherten Informationen zu bewerten,
wobei das Ladeinfrastruktur-Informationsbereitstellungssystem (100) ferner aufweist:
eine Vielzahl von Ladeinfrastrukturvorrichtungen (130), die konfiguriert ist, um jeweils in der Vielzahl von Ladeinfrastrukturen (S) installiert zu sein, und um Informationen hinsichtlich einer Energie, die von einem Lader der Ladeinfrastruktur (S) dem elektrischen Fahrzeug (V) zugeführt wird, zu verwalten,
wobei jede der Ladeinfrastrukturvorrichtungen (130) eine Energiezufuhrdaten-Übertragungseinheit (134) umfasst, die konfiguriert ist, um Energiezufuhrdaten einschließlich der Informationen hinsichtlich der Menge an Energie, die von dem Lader dem elektrischen Fahrzeug (V) zugeführt wird, und Informationen, die anzeigen, durch welches Energieerzeugungsverfahren die Energie erzeugt wird, an die Ladeinfrastruktur-Informationsbereitstellungsvorrichtung (110) zu übertragen,
wobei die Ladeinfrastruktur-Informationsbereitstellungsvorrichtung (110) ferner eine Energiezufuhrdaten-Empfangseinheit (111) umfasst, die konfiguriert ist, um die von jeder der Ladeinfrastrukturvorrichtungen (130) übertragenen Energiezufuhrdaten zu empfangen, und
wobei die Energiezufuhr-Informationsspeichereinheit (114) der Ladeinfrastruktur-Informationsbereitstellungsvorrichtung (110) konfiguriert ist, um die Informationen hinsichtlich der Menge an Energie und die Informationen, die anzeigen, durch welches Energieerzeugungsverfahren die Energie erzeugt wird, die in den durch die Energiezufuhrdaten-Empfangseinheit (111) empfangenen Energiezufuhrdaten enthalten sind, sequenziell in Verbindung zueinander zu speichern.

2. Das Ladeinfrastruktur-Informationsbereitstellungssystem (100) nach Anspruch 1, wobei
das erste Energieerzeugungsverfahren zumindest eines von Windenergie, Sonnenlicht, hydraulischer Energie und einer Biomasse umfasst, und
das zweite Energieerzeugungsverfahren zumindest eines von Petroleum, natürlichem Gas, Ölsand, Methanhydrat und Uran umfasst.

3. Das Ladeinfrastruktur-Informationsbereitstellungssystem (100) nach Anspruch 1 oder 2,
wobei jede der Ladeinfrastrukturvorrichtungen (130) ferner eine Attributinformations-Akquirierungseinheit (131) umfasst, die konfiguriert ist, um Informationen zu akquirieren, die anzeigen, durch welches Energieerzeugungsverfahren Energie erzeugt wird, die von einer in der Ladeinfrastruktur installierten kommerziellen Energiequelle dem Lader zugeführt wird, und
wobei, wenn die von der kommerziellen Energiequelle dem Lader zugeführte Energie dem elektrischen Fahrzeug (V) zugeführt wird, die Energiezufuhrdaten-Übertragungseinheit (134) von jeder der Ladeinfrastrukturvorrichtungen (130) Energiezufuhrdaten einschließlich Informationen hinsichtlich einer Menge an Energie, die dem elektrischen Fahrzeug (V) zugeführt wird und der Informationen überträgt, die anzeigen, durch welches Energieerzeugungsverfahren die Energie erzeugt wird, die durch die Attributinformations-Akquirierungseinheit (131) akquiriert sind.

4. Das Ladeinfrastruktur-Informationsbereitstellungssystem (100) nach Anspruch 1 oder 2,
wobei jede der Ladeinfrastrukturvorrichtungen (130) ferner eine Attributinformations-Erzeugungseinheit (132) umfasst, die konfiguriert ist, um Informationen zu erzeugen, die anzeigen, durch welches Energieerzeugungsverfahren Energie erzeugt wird, die von einer in der Ladeinfrastruktur installierten verteilten Erzeugung dem Lader zugeführt wird, und
wobei, wenn die von der verteilten Erzeugung dem Lader zugeführte Energie dem elektrischen Fahrzeug (V) zugeführt wird, die Energiezufuhrdaten-Übertragungseinheit (134) von jeder der Ladeinfrastrukturvorrichtungen (130) Energiezufuhrdaten einschließlich Informationen hinsichtlich einer Menge an Energie, die dem elektrischen Fahrzeug (V) zugeführt wird, und der Informationen überträgt, die anzeigen, durch welches Energieerzeugungsverfahren die Energie erzeugt wird, und die durch die Attributinformations-Erzeugungseinheit (132) erzeugt sind.

5. Eine Ladeinfrastruktur-Informationsbereitstellungsvorrichtung (110), die Informationen hinsichtlich Ladeinfrastrukturen (S) einem Nutzer eines elektrischen Fahrzeugs (V) bereitstellt, wobei die Ladeinfrastruktur-Informationsbereitstellungsvorrichtung (110) aufweist:
eine Ladeinfrastruktur-Informationsbereitstellungseinheit (113), die konfiguriert ist, um Informationen hinsichtlich einer Ladeinfrastruktur (S), die vorzugsweise durch ein erstes Energieerzeugungsverfahren erzeugte Energie anstelle einer durch ein zweites Energieerzeugungsverfahren erzeugten Energie verwendet, einem Nutzerendgerät des Nutzers des elektrischen Fahrzeugs (V) bereitzustellen, indem die Informationen dem World Wide Web zur Verfügung gestellt werden, wobei das Nutzerendgerät des Nutzers des elektrischen Fahrzeugs (V) konfiguriert ist, um die zur Verfügung gestellten Informationen zu akquirieren; und
eine Beitragsbewertungseinheit (112), die konfiguriert ist, um ein Verhältnis des ersten Energieerzeugungsverfahren und des zweiten Energieerzeugungsverfahrens, die durch jede Ladeinfrastruktur (S) verwendet werden, basierend auf Informationen hinsichtlich einer Menge der dem elektrischen Fahrzeug (V) in jeder Ladeinfrastruktur (S) zugeführten Energie und Informationen zu bewerten, die anzeigen, durch welches Energieerzeugungsverfahren die Energie erzeugt wird,
wobei die Ladeinfrastruktur-Informationsbereitstellungseinheit (113) konfiguriert ist, um die Informationen hinsichtlich der Ladeinfrastruktur (S), die vorzugsweise durch das erste Energieerzeugungsverfahren erzeugte Energie anstelle einer durch das zweite Energieerzeugungsverfahren erzeugten Energie verwendet, basierend auf einem durch die Beitragsbewertungseinheit (112) bewerteten Ergebnis bereitzustellen,
wobei die Ladeinfrastruktur-Informationsbereitstellungsvorrichtung (110) ferner eine Energiezufuhr-Informationsspeichereinheit (114) umfasst, die konfiguriert ist, um die Informationen hinsichtlich der Menge an Energie, die dem elektrischen Fahrzeug (V) in jeder Ladeinfrastruktur (S) zugeführt wird, und die Informationen sequenziell in Verbindung zueinander zu speichern, die anzeigen, durch welches Energieerzeugungsverfahren die Energie erzeugt wird,
wobei die Beitragsbewertungseinheit (112) der Ladeinfrastruktur-Informationsbereitstellungsvorrichtung (110) konfiguriert ist, um das Verhältnis des ersten Energieerzeugungsverfahrens und des zweiten Energieerzeugungsverfahrens, die durch jede Ladeinfrastruktur (S) verwendet werden, basierend auf den in der Energiezufuhr-Informationsspeichereinheit (114) gespeicherten Informationen zu bewerten,
wobei die Ladeinfrastruktur-Informationsbereitstellungsvorrichtung (110) ferner eine Energiezufuhrdaten-Empfangseinheit (111) umfasst, die konfiguriert ist, um die von jeder einer Vielzahl von Ladeinfrastrukturvorrichtungen (130) übertragenen Energiezufuhrdaten zu empfangen, die konfiguriert ist, um jeweils in der Vielzahl von Ladeinfrastrukturen (S) installiert zu sein, und um Informationen hinsichtlich Energie, die von einem Lader der Ladeinfrastruktur (S) dem elektrischen Fahrzeug (V) zugeführt wird, zu verwalten,
wobei jede der Ladeinfrastrukturvorrichtungen (130) eine Energiezufuhrdaten-Übertragungseinheit (134) umfasst, die konfiguriert ist, um Energiezufuhrdaten einschließlich der Informationen hinsichtlich der Menge an Energie, die von dem Lader dem elektrischen Fahrzeug (V) zugeführt wird, und Informationen, die anzeigen, durch welches Energieerzeugungsverfahren die Energie erzeugt wird, an die Ladeinfrastruktur-Informationsbereitstellungsvorrichtung (110) zu übertragen, und
wobei die Energiezufuhr-Informationsspeichereinheit (114) der Ladeinfrastruktur-Informationsbereitstellungsvorrichtung (110) konfiguriert ist, um die Informationen hinsichtlich der Menge an Energie und die Informationen sequenziell in Verbindung zueinander zu speichern, die anzeigen, durch welches Energieerzeugungsverfahren die Energie erzeugt wird, die in den durch die Energiezufuhrdaten-Empfangseinheit (111) empfangenen Energiezufuhrdaten enthalten sind.

6. Ein Steuerverfahren zum Steuern einer Ladeinfrastruktur-Informationsbereitstellungsvorrichtung (100), die Informationen hinsichtlich Ladeinfrastrukturen (S) einem Nutzer eines elektrischen Fahrzeugs (V) bereitstellt, wobei das Steuerverfahren aufweist:
einen Ladeinfrastruktur-Informationsbereitstellungsschritt zum Bereitstellen von Informationen hinsichtlich einer Ladeinfrastruktur (S), die vorzugsweise durch ein erstes Energieerzeugungsverfahren erzeugte Energie anstelle einer durch ein zweites Energieerzeugungsverfahren erzeugten Energie verwendet, einem Nutzerendgerät des Nutzers des elektrischen Fahrzeugs (V), indem die Informationen dem World Wide Web zur Verfügung gestellt werden, wobei das Nutzerendgerät des Nutzers des elektrischen Fahrzeugs (V) die zur Verfügung gestellten Informationen akquiriert; und
einen Beitragsbewertungsschritt zum Bewerten eines Verhältnisses des ersten Energieerzeugungsverfahrens und des zweiten Energieerzeugungsverfahrens, die durch jede Ladeinfrastruktur (S) verwendet werden, basierend auf Informationen hinsichtlich einer Menge der dem elektrischen Fahrzeug (V) in jeder Ladeinfrastruktur (S) zugeführten Energie und Informationen, die anzeigen, durch welches Energieerzeugungsverfahren die Energie erzeugt wird,
wobei in dem Ladeinfrastruktur-Informationsbereitstellungsschritt die Informationen hinsichtlich der Ladeinfrastruktur (S), die vorzugsweise durch das erste Energieerzeugungsverfahren erzeugte Energie anstelle einer durch das zweite Energieerzeugungsverfahren erzeugten Energie verwendet, basierend auf einem in dem Beitragsbewertungsschritt bewerteten Ergebnis bereitgestellt wird,
wobei in dem Ladeinfrastruktur-Informationsbereitstellungsschritt die Informationen hinsichtlich der Menge an Energie, die dem elektrischen Fahrzeug (V) in jeder Ladeinfrastruktur (S) zugeführt wird, und die Informationen sequenziell in Verbindung zueinander gespeichert werden, die anzeigen, durch welches Energieerzeugungsverfahren die Energie erzeugt wird,
wobei in dem Beitragsbewertungsschritt das Verhältnis des ersten Energieerzeugungsverfahrens und des zweiten Energieerzeugungsverfahrens, die durch jede Ladeinfrastruktur (S) verwendet werden, basierend auf den gespeicherten Informationen bewertet wird,
wobei der Ladeinfrastruktur-Informationsbereitstellungsschritt ferner einen Energiezufuhrdaten-Empfangsschritt umfasst zum Empfangen der von jeder einer Vielzahl von Ladeinfrastrukturvorrichtungen (130) übertragenen Energiezufuhrdaten, die konfiguriert ist, um jeweils in der Vielzahl von Ladeinfrastrukturen (S) installiert zu sein, und um Informationen hinsichtlich Energie, die von einem Lader der Ladeinfrastruktur (S) dem elektrischen Fahrzeug (V) zugeführt wird, zu verwalten,
wobei jede der Ladeinfrastrukturvorrichtungen (130) eine Energiezufuhrdaten-Übertragungseinheit (134) umfasst, die Energiezufuhrdaten einschließlich der Informationen hinsichtlich der Menge an Energie, die von dem Lader dem elektrischen Fahrzeug (V) zugeführt wird, und Informationen, die anzeigen, durch welches Energieerzeugungsverfahren die Energie erzeugt wird, an die Ladeinfrastruktur-Informationsbereitstellungsvorrichtung (110) überträgt, und
wobei in dem Ladeinfrastruktur-Informationsbereitstellungsschritt die Informationen hinsichtlich der Menge an Energie und die Informationen sequenziell in Verbindung zueinander gespeichert werden, die anzeigen, durch welches Energieerzeugungsverfahren die Energie erzeugt wird, die in den in dem Energiezufuhrdaten-Empfangsschritt empfangenen Energiezufuhrdaten enthalten sind.

7. Ein Programm für eine Ladeinfrastruktur-Informationsbereitstellungsvorrichtung (100), die Informationen hinsichtlich Ladeinfrastrukturen (S) einem Nutzer eines elektrischen Fahrzeugs (V) bereitstellt, wobei das Programm bewirkt, dass die Ladeinfrastruktur-Informationsbereitstellungsvorrichtung (100) fungiert als
eine Ladeinfrastruktur-Informationsbereitstellungseinheit (113), die konfiguriert ist, um Informationen hinsichtlich einer Ladeinfrastruktur, die vorzugsweise durch ein erstes Energieerzeugungsverfahren erzeugte Energie anstelle einer durch ein zweites Energieerzeugungsverfahren erzeugten Energie verwendet, einem Nutzerendgerät des Nutzers des elektrischen Fahrzeugs (V) bereitzustellen, indem die Informationen dem World Wide Web zur Verfügung gestellt werden, wobei das Nutzerendgerät des Nutzers des elektrischen Fahrzeugs (V) die zur Verfügung gestellten Informationen akquiriert, und
eine Beitragsbewertungseinheit (112), die konfiguriert ist um ein Verhältnis des ersten Energieerzeugungsverfahrens und des zweiten Energieerzeugungsverfahrens, die durch jede Ladeinfrastruktur (S) verwendet werden, basierend auf Informationen hinsichtlich einer Menge der dem elektrischen Fahrzeug (V) in jeder Ladeinfrastruktur (S) zugeführten Energie und Informationen zu bewerten, die anzeigen, durch welches Energieerzeugungsverfahren die Energie erzeugt wird,
wobei die Ladeinfrastruktur-Informationsbereitstellungseinheit (113) konfiguriert ist, um die Informationen hinsichtlich der Ladeinfrastruktur (S), die vorzugsweise durch das erste Energieerzeugungsverfahren erzeugte Energie anstelle einer durch das zweite Energieerzeugungsverfahren erzeugten Energie verwendet, basierend auf einem durch die Beitragsbewertungseinheit (112) bewerteten Ergebnis bereitzustellen,
wobei das Programm ferner bewirkt, dass die Ladeinfrastruktur-Informationsbereitstellungsvorrichtung (100) fungiert als
eine Energiezufuhr-Informationsspeichereinheit (114), die konfiguriert ist, um die Informationen hinsichtlich der Menge an Energie, die dem elektrischen Fahrzeug (V) in jeder Ladeinfrastruktur (S) zugeführt wird, und die Informationen sequenziell in Verbindung zueinander zu speichern, die anzeigen, durch welches Energieerzeugungsverfahren die Energie erzeugt wird,
wobei die Beitragsbewertungseinheit (112) der Ladeinfrastruktur-Informationsbereitstellungsvorrichtung (110) konfiguriert ist, um das Verhältnis des ersten Energieerzeugungsverfahrens und des zweiten Energieerzeugungsverfahrens, die durch jede Ladeinfrastruktur (S) verwendet werden, basierend auf den in der Energiezufuhr-Informationsspeichereinheit (114) gespeicherten Informationen zu bewerten, und
wobei das Programm ferner bewirkt, dass die Ladeinfrastruktur-Informationsbereitstellungsvorrichtung (100) fungiert als
eine Energiezufuhrdaten-Empfangseinheit (111), die konfiguriert ist, um die von jeder einer Vielzahl von Ladeinfrastrukturvorrichtungen (130) übertragenen Energiezufuhrdaten zu empfangen, die konfiguriert ist, um jeweils in der Vielzahl von Ladeinfrastrukturen (S) installiert zu sein, und um Informationen hinsichtlich Energie, die von einem Lader der Ladeinfrastruktur (S) dem elektrischen Fahrzeug (V) zugeführt wird, zu verwalten,
wobei jede der Ladeinfrastrukturvorrichtungen (130) eine Energiezufuhrdaten-Übertragungseinheit (134) umfasst, die konfiguriert ist, um Energiezufuhrdaten einschließlich der Informationen hinsichtlich der Menge an Energie, die von dem Lader dem elektrischen Fahrzeug (V) zugeführt wird, und Informationen, die anzeigen, durch welches Energieerzeugungsverfahren die Energie erzeugt wird, an die Ladeinfrastruktur-Informationsbereitstellungsvorrichtung (110) zu übertragen, und
wobei die Energiezufuhr-Informationsspeichereinheit (114) der Ladeinfrastruktur-Informationsbereitstellungsvorrichtung (110) konfiguriert ist, um die Informationen hinsichtlich der Menge an Energie und die Informationen sequenziell in Verbindung zueinander zu speichern, die anzeigen, durch welches Energieerzeugungsverfahren die Energie erzeugt wird, die in den durch die Energiezufuhrdaten-Empfangseinheit (111) empfangenen Energiezufuhrdaten enthalten sind.

## Revendications

1. Système de fourniture d'informations d'infrastructure de charge (100) fournissant des informations concernant des infrastructures de charge (S) à un utilisateur d'un véhicule électrique (V), le système de fourniture d'informations d'infrastructure de charge (100) comprenant :
un dispositif de fourniture d'informations d'infrastructure de charge (110) configuré pour fournir les informations concernant chaque infrastructure de charge (S) à l'utilisateur du véhicule électrique (V) en publiant les informations sur le Web,
dans lequel le dispositif de fourniture d'informations d'infrastructure de charge (110) comporte :
une unité de fourniture d'informations d'infrastructure de charge (113) configurée pour fournir des informations concernant une infrastructure de charge (S), qui emploie préférentiellement une énergie produite par un premier procédé de production d'énergie de préférence à une énergie produite par un deuxième procédé de production d'énergie, à un terminal utilisateur de l'utilisateur du véhicule électrique (V) en publiant les informations sur le Web, dans lequel le terminal utilisateur de l'utilisateur du véhicule électrique (V) est configuré pour acquérir les informations publiées ; et
une unité d'évaluation de contribution (112) configurée pour évaluer un rapport entre le premier procédé de production d'énergie et le deuxième procédé de production d'énergie utilisés par chaque infrastructure de charge (S) d'après des informations concernant une quantité d'énergie apportée au véhicule électrique (V) dans chaque infrastructure de charge (S) et des informations indiquant par quel procédé de production d'énergie l'énergie est produite,
dans lequel l'unité de fourniture d'informations d'infrastructure de charge (113) est configurée pour fournir les informations concernant l'infrastructure de charge (S), qui emploie préférentiellement une énergie produite par le premier procédé de production d'énergie de préférence à une énergie produite par le deuxième procédé de production d'énergie, d'après un résultat évalué par l'unité d'évaluation de contribution (112),
dans lequel le dispositif de fourniture d'informations d'infrastructure de charge (110) comporte en outre une unité de stockage d'informations d'apport d'énergie (114) configurée pour stocker séquentiellement les informations concernant la quantité d'énergie apportée au véhicule électrique (V) dans chaque infrastructure de charge (S) et les informations indiquant par quel procédé de production d'énergie l'énergie est produite en association avec celle-ci, et
dans lequel l'unité d'évaluation de contribution (112) du dispositif de fourniture d'informations d'infrastructure de charge (110) est configurée pour évaluer le rapport entre le premier procédé de production d'énergie et le deuxième procédé de production d'énergie utilisés par chaque infrastructure de charge (S) d'après les informations stockées dans l'unité de stockage d'informations d'apport d'énergie (114),
le système de fourniture d'informations d'infrastructure de charge (100) comprenant en outre :
une pluralité de dispositifs d'infrastructure de charge (130) configurés pour être installés dans la pluralité d'infrastructures de charge (S), respectivement, et gérer des informations concernant une énergie apportée depuis un chargeur de l'infrastructure de charge (S) au véhicule électrique (V),
dans lequel chacun des dispositifs d'infrastructure de charge (130) comporte une unité de transmission de données d'apport d'énergie (134) configurée pour transmettre au dispositif de fourniture d'informations d'infrastructure de charge (110) des données d'apport d'énergie comportant les informations concernant la quantité d'énergie apportée depuis le chargeur au véhicule électrique (V) et des informations indiquant par quel procédé de production d'énergie l'énergie est produite,
dans lequel le dispositif de fourniture d'informations d'infrastructure de charge (110) comporte en outre une unité de réception de données d'apport d'énergie (111) qui est configurée pour recevoir les données d'apport d'énergie transmises depuis chacun des dispositifs d'infrastructure de charge (130), et
dans lequel l'unité de stockage d'informations d'apport d'énergie (114) du dispositif de fourniture d'informations d'infrastructure de charge (110) est configurée pour stocker séquentiellement les informations concernant la quantité d'énergie et les informations indiquant par quel procédé de production d'énergie l'énergie est produite, incluses dans les données d'apport d'énergie reçues par l'unité de réception de données d'apport d'énergie (111) en association avec celle-ci.

2. Système de fourniture d'informations d'infrastructure de charge (100) selon la revendication 1, dans lequel
le premier procédé de production d'énergie comporte au moins l'une parmi l'énergie éolienne, la lumière solaire, l'énergie hydraulique, et une biomasse, et
le deuxième procédé de production d'énergie comporte au moins l'un parmi le pétrole, le gaz naturel, des sables bitumineux, un hydrate de méthane, et l'uranium.

3. Système de fourniture d'informations d'infrastructure de charge (100) selon la revendication 1 ou 2,
dans lequel chacun des dispositifs d'infrastructure de charge (130) comporte en outre une unité d'acquisition d'informations d'attribut (131) configurée pour acquérir des informations indiquant par quel procédé de production d'énergie une énergie, fournie au chargeur depuis un bloc d'alimentation commerciale installé dans l'infrastructure de charge, est produite, et
dans lequel, lorsque l'énergie fournie au chargeur depuis le bloc d'alimentation commerciale est apportée au véhicule électrique (V), l'unité de transmission de données d'apport d'énergie (134) de chacun des dispositifs d'infrastructure de charge (130) transmet des données d'apport d'énergie comportant des informations concernant une quantité d'énergie apportée au véhicule électrique (V) et les informations indiquant par quel procédé de production d'énergie l'énergie est produite acquises par l'unité d'acquisition d'informations d'attribut (131).

4. Système de fourniture d'informations d'infrastructure de charge (100) selon la revendication 1 ou 2,
dans lequel chacun des dispositifs d'infrastructure de charge (130) comporte en outre une unité de production d'informations d'attribut (132) configurée pour produire des informations indiquant par quel procédé de production d'énergie une énergie fournie au chargeur depuis une production décentralisée installée dans l'infrastructure de charge (S) est produite, et
dans lequel, lorsque l'énergie fournie au chargeur depuis la production décentralisée est apportée au véhicule électrique (V), l'unité de transmission de données d'apport d'énergie (134) de chacun des dispositifs d'infrastructure de charge (130) transmet des données d'apport d'énergie comportant des informations concernant une quantité d'énergie apportée au véhicule électrique (V) et les informations indiquant par quel procédé de production d'énergie l'énergie est produite, produites par l'unité de production d'informations d'attribut (132).

5. Dispositif de fourniture d'informations d'infrastructure de charge (110) fournissant des informations concernant des infrastructures de charge (S) à un utilisateur d'un véhicule électrique (V), le dispositif de fourniture d'informations d'infrastructure de charge (110) comprenant :
une unité de fourniture d'informations d'infrastructure de charge (113) configurée pour fournir des informations concernant une infrastructure de charge, qui emploie préférentiellement une énergie produite par le premier procédé de production d'énergie de préférence à une énergie produite par le deuxième procédé de production d'énergie, à un terminal utilisateur de l'utilisateur du véhicule électrique (V) en publiant les informations sur le Web, dans lequel le terminal utilisateur de l'utilisateur du véhicule électrique (V) est configuré pour acquérir les informations publiées ; et
une unité d'évaluation de contribution (112) configurée pour évaluer un rapport entre le premier procédé de production d'énergie et le deuxième procédé de production d'énergie utilisés par chaque infrastructure de charge (S) d'après des informations concernant une quantité d'énergie apportée au véhicule électrique (V) dans chaque infrastructure de charge (S) et des informations indiquant par quel procédé de production d'énergie l'énergie est produite,
dans lequel l'unité de fourniture d'informations d'infrastructure de charge (113) est configurée pour fournir les informations concernant l'infrastructure de charge (S), qui emploie préférentiellement une énergie produite par le premier procédé de production d'énergie de préférence à une énergie produite par le deuxième procédé de production d'énergie, d'après un résultat évalué par l'unité d'évaluation de contribution (112),
dans lequel le dispositif de fourniture d'informations d'infrastructure de charge (110) comporte en outre une unité de stockage d'informations d'apport d'énergie (114) configurée pour stocker séquentiellement les informations concernant la quantité d'énergie apportée au véhicule électrique (V) dans chaque infrastructure de charge (S) et les informations indiquant par quel procédé de production d'énergie l'énergie est produite en association avec celle-ci,
dans lequel l'unité d'évaluation de contribution (112) du dispositif de fourniture d'informations d'infrastructure de charge (110) est configurée pour évaluer le rapport entre le premier procédé de production d'énergie et le deuxième procédé de production d'énergie utilisés par chaque infrastructure de charge (S) d'après les informations stockées dans l'unité de stockage d'informations d'apport d'énergie (114),
dans lequel le dispositif de fourniture d'informations d'infrastructure de charge (110) comporte en outre une unité de réception de données d'apport d'énergie (111) qui est configurée pour recevoir les données d'apport d'énergie transmises depuis chacun d'une pluralité de dispositifs d'infrastructure de charge (130) configurés pour être installés dans la pluralité d'infrastructures de charge (S), respectivement, et gérer des informations concernant une énergie apportée depuis un chargeur de l'infrastructure de charge (S) au véhicule électrique (V),
dans lequel chacun des dispositifs d'infrastructure de charge (130) comporte une unité de transmission de données d'apport d'énergie (134) configurée pour transmettre au dispositif de fourniture d'informations d'infrastructure de charge (110) des données d'apport d'énergie comportant les informations concernant la quantité d'énergie apportée depuis le chargeur au véhicule électrique (V) et des informations indiquant par quel procédé de production d'énergie l'énergie est produite, et
dans lequel l'unité de stockage d'informations d'apport d'énergie (114) du dispositif de fourniture d'informations d'infrastructure de charge (110) est configurée pour stocker séquentiellement les informations concernant la quantité d'énergie et les informations indiquant par quel procédé de production d'énergie l'énergie est produite, incluses dans les données d'apport d'énergie reçues par l'unité de réception de données d'apport d'énergie (111) en association avec celle-ci.

6. Procédé de commande destiné à commander un dispositif de fourniture d'informations d'infrastructure de charge (100) fournissant des informations concernant des infrastructures de charge (S) à un utilisateur d'un véhicule électrique (V), le procédé de commande comprenant :
une étape de fourniture d'informations d'infrastructure de charge consistant à fournir des informations concernant une infrastructure de charge (S), qui emploie préférentiellement une énergie produite par le premier procédé de production d'énergie de préférence à une énergie produite par le deuxième procédé de production d'énergie, à un terminal utilisateur de l'utilisateur du véhicule électrique (V) en publiant les informations sur le Web, dans lequel le terminal utilisateur de l'utilisateur du véhicule électrique (V) acquiert les informations publiées ; et
une étape d'évaluation de contribution consistant à évaluer un rapport entre le premier procédé de production d'énergie et le deuxième procédé de production d'énergie utilisés par chaque infrastructure de charge (S) d'après des informations concernant une quantité d'énergie apportée au véhicule électrique (V) dans chaque infrastructure de charge (S) et des informations indiquant par quel procédé de production d'énergie l'énergie est produite,
dans lequel, à l'étape de fourniture d'informations d'infrastructure de charge, les informations concernant l'infrastructure de charge (S), qui emploie préférentiellement une énergie produite par le premier procédé de production d'énergie de préférence à une énergie produite par le deuxième procédé de production d'énergie, sont fournies d'après un résultat évalué à l'étape d'évaluation de contribution,
dans lequel, à l'étape de fourniture d'informations d'infrastructure de charge, les informations concernant la quantité d'énergie apportée au véhicule électrique (V) dans chaque infrastructure de charge (S) et les informations indiquant par quel procédé de production d'énergie l'énergie est produite en association avec celle-ci sont stockées séquentiellement,
dans lequel, à l'étape d'évaluation de contribution, le rapport entre le premier procédé de production d'énergie et le deuxième procédé de production d'énergie utilisés par chaque infrastructure de charge (S) est évalué d'après les informations stockées,
dans lequel l'étape de fourniture d'informations d'infrastructure de charge comporte en outre une étape de réception de données d'apport d'énergie consistant à recevoir les données d'apport d'énergie transmises depuis chacun d'une pluralité de dispositifs d'infrastructure de charge (130) configurés pour être installés dans la pluralité d'infrastructures de charge (S), respectivement, et gérer des informations concernant une énergie apportée depuis un chargeur de l'infrastructure de charge (S) au véhicule électrique (V),
dans lequel chacun des dispositifs d'infrastructure de charge (130) comporte une unité de transmission de données d'apport d'énergie (134) transmettant au dispositif de fourniture d'informations d'infrastructure de charge (110) des données d'apport d'énergie comportant les informations concernant la quantité d'énergie apportée depuis le chargeur au véhicule électrique (V) et des informations indiquant par quel procédé de production d'énergie l'énergie est produite, et
dans lequel, à l'étape de fourniture d'informations d'infrastructure de charge, les informations concernant la quantité d'énergie et les informations indiquant par quel procédé de production d'énergie l'énergie est produite, incluses dans les données d'apport d'énergie reçues à l'étape de réception de données d'apport d'énergie en association avec celle-ci, sont stockées séquentiellement.

7. Programme pour un dispositif de fourniture d'informations d'infrastructure de charge (100) fournissant des informations concernant des infrastructures de charge (S) à un utilisateur d'un véhicule électrique (V), le programme amenant le dispositif de fourniture d'informations d'infrastructure de charge (100)
à fonctionner en tant qu'unité de fourniture d'informations d'infrastructure de charge (113) configurée pour fournir des informations concernant une infrastructure de charge, qui emploie préférentiellement une énergie produite par le premier procédé de production d'énergie de préférence à une énergie produite par le deuxième procédé de production d'énergie, à un terminal utilisateur de l'utilisateur du véhicule électrique (V) en publiant les informations sur le Web, dans lequel le terminal utilisateur de l'utilisateur du véhicule électrique (V) acquiert les informations publiées, et
à fonctionner en tant qu'unité d'évaluation de contribution (112) configurée pour évaluer un rapport entre le premier procédé de production d'énergie et le deuxième procédé de production d'énergie utilisés par chaque infrastructure de charge (S) d'après des informations concernant une quantité d'énergie apportée au véhicule électrique (V) dans chaque infrastructure de charge (S) et des informations indiquant par quel procédé de production d'énergie l'énergie est produite,
dans lequel l'unité de fourniture d'informations d'infrastructure de charge (113) est configurée pour fournir les informations concernant l'infrastructure de charge (S), qui emploie préférentiellement une énergie produite par le premier procédé de production d'énergie de préférence à une énergie produite par le deuxième procédé de production d'énergie, d'après un résultat évalué par l'unité d'évaluation de contribution (112),
le programme amenant en outre le dispositif de fourniture d'informations d'infrastructure de charge (100)
à fonctionner en tant qu'unité de stockage d'informations d'apport d'énergie (114) configurée pour stocker séquentiellement les informations concernant la quantité d'énergie apportée au véhicule électrique (V) dans chaque infrastructure de charge (S) et les informations indiquant par quel procédé de production d'énergie l'énergie est produite en association avec celle-ci,
dans lequel l'unité d'évaluation de contribution (112) du dispositif de fourniture d'informations d'infrastructure de charge (110) est configurée pour évaluer le rapport entre le premier procédé de production d'énergie et le deuxième procédé de production d'énergie utilisés par chaque infrastructure de charge (S) d'après les informations stockées dans l'unité de stockage d'informations d'apport d'énergie (114), et
le programme amenant en outre le dispositif de fourniture d'informations d'infrastructure de charge (100)
à fonctionner en tant qu'unité de réception de données d'apport d'énergie (111) qui est configurée pour recevoir les données d'apport d'énergie transmises depuis chacun d'une pluralité de dispositifs d'infrastructure de charge (130) configurés pour être installés dans la pluralité d'infrastructures de charge (S), respectivement, et gérer des informations concernant une énergie apportée depuis un chargeur de l'infrastructure de charge (S) au véhicule électrique (V),
dans lequel chacun des dispositifs d'infrastructure de charge (130) comporte une unité de transmission de données d'apport d'énergie (134) configurée pour transmettre au dispositif de fourniture d'informations d'infrastructure de charge (110) des données d'apport d'énergie comportant les informations concernant la quantité d'énergie apportée depuis le chargeur au véhicule électrique (V) et des informations indiquant par quel procédé de production d'énergie l'énergie est produite, et
dans lequel l'unité de stockage d'informations d'apport d'énergie (114) du dispositif de fourniture d'informations d'infrastructure de charge (110) est configurée pour stocker séquentiellement les informations concernant la quantité d'énergie et les informations indiquant par quel procédé de production d'énergie l'énergie est produite, incluses dans les données d'apport d'énergie reçues par l'unité de réception de données d'apport d'énergie (111) en association avec celle-ci.
